Europäisches Patentamt

**European Patent Office**

**Office européen des brevets**

(11) Publication number: **0 092 533**
A1

## (12) EUROPEAN PATENT APPLICATION

(21) Application number: **83850094.0**

(22) Date of filing: **12.04.83**

(51) Int. Cl.³: **B 23 K 37/04**

(30) Priority: **19.04.82 SE 8202440**

(43) Date of publication of application: **26.10.83**
**Bulletin 83/43**

(84) Designated Contracting States: **AT CH DE FR GB IT LI**

(71) Applicant: **Palmér, Lennart, Rinkabyholmsvägen 15,
S-394 77 Kalmar (SE)**

(72) Inventor: **Palmér, Lennart, Rinkabyholmsvägen 15,
S-394 77 Kalmar (SE)**

(74) Representative: **Örtenblad, Bertil Tore, Noréns
Patentbyra AB Banérgatan 73, S-11526 Stockholm (SE)**

(54) **Welding bench.**

(57) A welding bench intended especially for carrying workpieces to be welded by a welding robot.

The welding bench according to the invention permits the setting of workpieces in different positions relative to a welding robot while the workpiece is supported on an inner frame (2).

According to the invention, the welding bench (1) comprises an inner frame (2), on which workpieces are to be attached, and which inner frame (2) is tiltable about a hinge axle (3, 4) in an outer frame (5). The outer frame (5) is supported on a stand (6) and rotatable relative to the stand (6) about a rotation axle (12). The rotation axle (12) extends substantially perpendicularly to said hinge axle (3, 4). The inner frame (2) and, respectively, the outer frame (5) are driven each by a motor (22 and, respectively, 15).

The inner frame (2) is lockable relative to the outer frame (5), and the outer frame (5) is lockable relative to the stand (6).

## Welding bench

This invention relates to a welding bench intended primarily to be used in connection with robot welding of workpieces.

At the robot welding of different workpieces, a robot carrying a welding head is programmed to carry out certain definite movements and thereby to weld. The workpieces to be welded are positioned accurately in relation to the robot and generally fixed in their position in so-called welding fixtures.

In many cases such a workpiece is to be provided with several welds, which may be located both on the upper and lower surface of the workpiece.

At such welding it is necessary, at the present state of art, to place the same workpiece in different fixtures for rendering possible the welding of all welds. The reason of this is that the robot is not capable to approach all welding points when the workpiece is clamped in a fixture, and another reason is, from a purely welding technical point of view, that the workpiece shall be inclined slightly so that the welding line on the workpiece forms a certain angle with the horizontal plane.

When workpieces are to be welded together by a plurality of welds in different places, the workpiece often must be clamped in more than two fixtures so that the robot can approach the zone in question, and also a suitable inclination of the welding line is obtained.

At present fixtures are available, which can be rotated between two end positions about an axle. These fixtures imply for certain workpieces that at least two welds can be laid while the workpiece is fixed, by rotating the fixture between said two end positions.

In most cases, however, an optimum welding operation requires the workpiece to be capable of being rotated in all directions. This, however, is not possible with known art in the technological field concerned.

To fix workpieces in fixtures is a manual work, which requires much time, and it therefore constitutes a substantial part of the costs of robot welding. The present invention eliminates the aforesaid shortcomings and permits in most cases that the workpiece is to be fixed only once in a fixture.

The present invention, thus, relates to a welding bench intended especially for carrying workpieces to be welded by a welding robot, and is characterized in that the welding bench comprises an inner frame, on which the workpieces are intended to be attached, which inner frame is tiltable about a hinge axle in an outer frame, that the outer frame is supported on a stand and rotatable relative to the stand about a rotation axle, that the rotation axle extends substantially perpendicularly to said hinge axle, that the inner and, respectively, outer frame are driven by a motor each, and that the inner frame is lockable relative to the outer frame, and the outer frame is lockable relative to the stand.

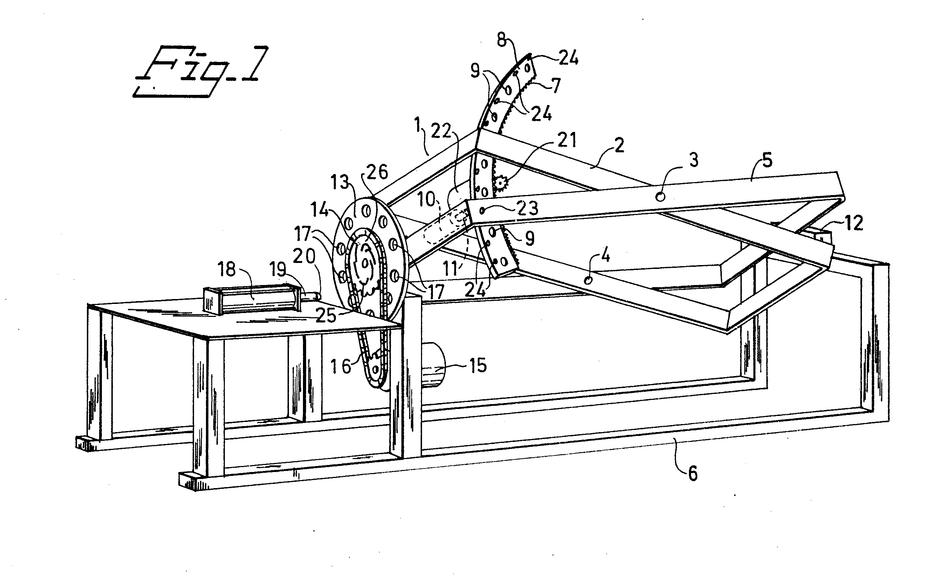

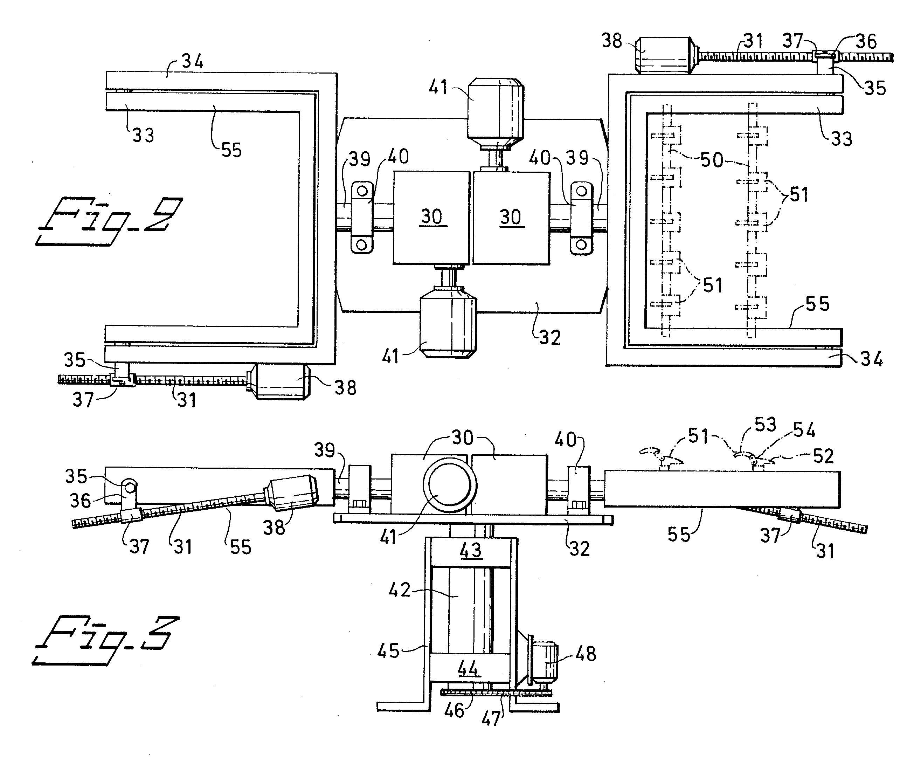

The invention is described in greater detail in the following, with reference to the accompanying drawings, in which Fig. 1 is a schematic perspective view of a welding bench according to a first embodiment of the invention, Fig. 2 is a horizontal view of a welding bench according to a second embodiment of the invention, and Fig. 3 is a lateral view of the welding bench shown in Fig. 2.

In Fig. 1 the reference numeral 1 designates a welding bench according to a first embodiment of the invention. The welding bench comprises an inner frame 2, which is attached tiltably in bearing points 3,4 in an outer frame 5. Said outer frame 5 is rotatable in a stand 6. The bearing points 3,4 define the hinge axle of the inner frame 2, which hinge axle extends perpendicularly to the rotation axle of the outer frame 5.

The inner frame 2 is driven about its hinge axle and relative to the outer frame 5 by a first motor 22, which preferably is an electric motor. According to one embodiment shown in Fig. 1, the motor 22 is attached to the outer frame 5 and by a gear wheel 21 drives against a gear rack 7 or gear ring, which is attached on the inner frame 2. A flange 8 located in connection to the rack 7 is provided with holes 9 spaced uniformly along the length of the flange. A pneumatic or hydraulic cylinder 10 attached on the outer frame 5 and shown by dashed line in Fig. 1 carries at the free end of its piston rod a rod 11, which is intended to be inserted into one of said holes when this is located directly in front of the free end of the rod 11. Upon engagement of the rod 11 with a hole 9, thus, the inner frame 2 is locked relative to the outer frame 5 in an accurate and definite position.

The bearing points 3,4 are located on two opposed sides of the outer frame 5. With its remaining two opposed sides the outer frame 5 is supported on the stand 6.

At one of said lastmentioned sides the frame is supported in a bearing housing 12, and at its other opposed side a drive member is connected to an axle projecting from the frame 5.

The drive member, of course, can be designed in many different ways. In Fig. 1 a disc 13 is shown, to which a gear wheel 14 is connected. The driving is effected by a motor 15, preferably an electric motor. the power of which is transferred by a chain 16 to the gear wheel 14.

The disc 13 in Fig. 1 is provided with a plurality of holes 17 spaced uniformly at its periphery. A pneumatic or hydraulic cylinder 18 attached to the stand is provided at the free end of its piston rod 19 with a rod 20, which is intended to co-operate with the holes 17 in order thereby to lock the disc 13 and thereby the outer frame 5 in certain definite rotation positions.

The outer frame 5 and, respectively, the inner frame 2 according to the embodiment shown in Fig. 1, thus, are locked in the same way.

In Fig. 1 the gear rack 7 and the flange 8 are shown to have a limited extension, whereby the inner frame is restrictedly tiltable in the outer frame. The rack, however, can be given greater length, or the driving of the inner frame can be effected in connection to one of the bearing points, whereby the inner frame can be designed rotatable without restriction in the outer frame.

As the inner frame 2 can be locked relative to the outer frame 5, and the outer frame 5 is lockable relative to the stand 6, the inner frame 2 can be locked in an optional angle to the horizontal plane in two directions.

It is essential, that the setting of the two frames 2,5 in predetermined angular positions both relative to each other and relative to the stand 6 is carried out substantially accurately, and that, thus, predetermined angular position settings are reproducable. The reason of this is that a welding robot performs accurate movements, which at the utilization of the present welding bench are related to workpieces to be welded which are carried on the welding bench and fixed thereto.

The inner frame 2 is intended to carry one or several workpieces or to carry a number of workpieces via fixtures attached to the inner frame 2.

One or two fixtures for the workpieces to be welded, thus, are attached on the inner frame 2, and thereafter the workpieces are attached to the fixtures. A microcomputer or corresponding device is provided to control the two frames so as to assume a first rotation position suitable for one or several welds relative to the horizontal plane. A welding robot is programmed to carry out the welds intended. Thereafter the frames can be set in another predetermined rotation position, which is favourable for other welds on the same workpieces. Thereafter the welding robot carries out these welds, a.s.o.

By the present welding bench, thus, the very essential advantage is gained that the outer frame 5 can be rotated so that fixed workpieces also can be welded on their lower side without having to be clamped in a new fixture. This is not possible with a conventional fixture arrangement.

It is, thus, fully obvious that by the present invention a considerable amount of manual work of fixing workpieces can be eliminated, and that an optimum angle to the horizontal plane easily can be set for a weld, whereby a higher average quality of the welds is obtained.

As mentioned above, the frames 2,5 shall be lockable in different rotation angles. For certain purposes, a number of holes such as, for example, sixteen on the disc 13 and eight on the flange 8 are sufficient.

The welding bench, however, of course can be arranged so that every angular position can be set, as is exemplified below.

Irrespective of the design, however, position sensing members or angle transmitters of some kind are provided to indicate the angle between the inner frame 2 and outer frame 5 and, respectively, between the outer frame 5 and the stand 6.

According to one embodiment, an inductive transmitter 23 is attached to the outer frame 5 for sensing metal portions 24 projecting upward from the flange 8, whereby the position of the inner frame relative to the outer frame 5 is indicated. Inductive transmitters (not shown) also can be provided to sense metal flanges 25 projecting upward from a plate 26 on the gear wheel 14. The metal flanges can be arranged along four or more concentric circles and be binary coded and read by four or more radially placed inductive transmitters.

Instead of said arrangement, however, a pulse generator can be connected to each of the motors 15,22. Each of the pulse generators is capable to emit a pulse train to a counter in known manner in a control circuit (not shown) in order thereby to indicate said angular positions.

In connection with Fig. 1 a locking device comprising a rod co-operating with a hole was shown. Other locking devices of an available type, of course, can be used for locking the frames 2,5 in a set position. Such devices, for example, may be gear rings, gear racks, locking couplings and brakes of different types.

In Figs. 2 and 3 a welding bench 55 according to a second embodiment of the invention is shown.

As regards the aforesaid transmitters and locking devices, according to this second embodiment pulse generators are used as pulse transmitters. As locking devices a worm gear unit 30 and, respectively, a screw rod 31 are used.

In Figs. 2 and 3 two identical welding benches attached to turning disc 32 are shown placed against each other. In the following, therefore, the two identical welding benches are given the same reference numerals.

The inner frame 33 and the outer frame 34 are open. The inner frame 33 is connected to the screw rod 31 via an axle 35, a link 36 and a sleeve 37. The screw rod 31 is driven by a motor 38 attached to the outer frame 34. Upon operation of the motor 38, the screw rod is rotated in the sleeve 37 whereby the link 36, axle 35 and therewith the inner frame 33 are rotated relative to the outer frame 34. The outer frame 34 is attached on an axle 39, which is supported in a bearing 40. The axle 39 is connected to a motor 41 via the worm gear 30. Upon operation of the motor 41, thus, the outer frame 34 is rotated.

Each of the welding benches according to the embodiment in Fig. 2, of course, can be utilized individually. In certain connections, however, it is especially preferable to arrange two welding benches as shown in Figs. 2 and 3 on a common turn disc 32.

The turn disc 32 is supported on an axle 42, which is mounted by two bearings 43,44 in a stand 45. The axle 42 is driven by an electric motor 48 by means of a chain ring 46 and a chain 47. The object is at each occasion to rotate the axle 42 through 180°, whereby the welding benches change place. A welding robot is located at one welding bench. When this robot carries out welding work, workpieces are fixed on the other welding bench. When the robot has completed its work, and new workpieces have been fixed, the welding benches change place, whereafter welded workpieces are removed and new workpieces are fixed a.s.o.

In Fig. 2 fixtures 50 are indicated by dashed line. Every fixture comprises clamping members 51, each of which, for example, can comprise a pair of jaws 52 for retaining a workpiece, and a lever 53 for interlocking the jaws via a linkage 54.

8

The present invention, of course, must not be regarded restricted to the embodiments set forth above. Said position sensing members, said driving and said locking devices, for example, can be replaced by such arrangements of a suitable kind and order.

It also is possible to imagine frames, which deviate from a rectangular or strict U-shape.

The present invention, therefore, must not be regarded restricted to the embodiments described, but can be varied within the scope of the attached claims.

Claims

1.  A welding bench intended especially for carrying workpieces to be welded by a welding robot, c h a r - a c t e r i z e d  i n  that the welding bench (1; 55) comprises an inner frame (2;33), on which workpieces are to be attached, and which is tiltable about an hinge axle (3,4;35) in an outer frame (5;34), that the outer frame (5;34) is supported on a stand (6;32) and rotatable relative to the stand (6;32) about a rotation axle (12;39), that the rotation axle (12;39) extends substantially perpendicularly to said hinge axle (3,4;35), that the inner frame (2;33) and, respectively, outer frame (5;35) are driven by a motor (22;15; 38,41) respectively, and that the inner frame (2;33) is lockable relative to the outer frame (5;34) and the outer frame (5;34) is lockable relative to the stand (6;32).

2.  A welding bench as defined in claim 1, c h a r - a c t e r i z e d  i n  that the inner frame (2;33) and, respectively, the outer frame (5;34) are rectangular, that said hinge axle (3.4;35) is located at two opposed sides of each frame, and that the rotation axle (12;39) of the outer frame (5;34) is located at the two remaining opposed sides of the outer frame.

3.  A welding bench as defined in claim 1, c h a r - a c t e r i z e d  i n  that the outer frame (34) and the inner frame (33) consist of only three sides, where said hinge axle (35) is located at the outer ends of the free sides, and that the outer frame (34) is rotatably supported at its intermediate side.

4.  A welding bench as defined in claim 1, 2 or 3, c h a r a c t e r i z e d  i n  that position sensing members (23,24,25) are provided for sensing the position of the inner frame (2;33) in relation to the outer frame (5;34) and for sensing the position of the outer frame (5;34) relative to the stand (6;32).

5. A welding bench as defined in claim 1,2,3 or 4, c h a r a c t e r i z e d  i n  that a locking device is provided which comprises a disc (13) connected to the rotation axle of the outer frame (5) and provided with holes (17) uniformly spaced along the periphery of the disc, with which holes the piston rod (19) or corresponding member of a cylinder (18) attached on the stand (6) co-operates when the piston rod (19) is pushed out of the cylinder (18).

6. A welding bench as defined in claim 1,2,3,4 or 5, c h a r a c t e r i z e d  i n  that a locking device is provided which comprises a flange (8) attached on the inner frame (2) and provided with holes (9) uniformly spaced along the length of the flange, with which holes a piston rod (11) or corresponding member of a cylinder (10) attached to the outer frame (5) co-operates when the piston rod (11) is pushed out of the cylinder (10).

7. A welding bench as defined in claim 3,4,5 or 6, c h a r a c t e r i z e d  i n  that two welding benches (55) according to claim 3 are mounted on a common turn disc (32) so that the free ends of the frames (33,34) are remote from each other, and that said turn disc (32) is supported on a vertical axle (42), so that the turn disc (32) is rotatable in a horizontal plane.

_Fig_1

Fig.2

Fig.3

European Patent Office

**EUROPEAN SEARCH REPORT**

| | **DOCUMENTS CONSIDERED TO BE RELEVANT** | | EP 83850094.0 |
|---|---|---|---|
| Category | Citation of document with indication, where appropriate, of relevant passages | Relevant to claim | CLASSIFICATION OF THE APPLICATION (Int. Cl. 3) |
| X | DE - B2 - 2 350 603 (INDUSTRIE-WERKE KARLSRUHE AUGSBURG AG.)<br><br>    * Fig. 3; column 4, lines 40-44 *<br><br>    ---- | 1 | B 23 K 37/04 |
| | | | **TECHNICAL FIELDS SEARCHED (Int. Cl. 3)**<br><br>B 23 K 37/00 |

The present search report has been drawn up for all claims

| Place of search | Date of completion of the search | Examiner |
|---|---|---|
| VIENNA | 07-07-1983 | BENCZE |